(19) Europäisches Patentamt

European Patent Office

Office européen des brevets

(11) **EP 0 710 756 B1**

(12) **EUROPÄISCHE PATENTSCHRIFT**

(45) Veröffentlichungstag und Bekanntmachung des Hinweises auf die Patenterteilung:
**04.04.2001 Patentblatt 2001/14**

(51) Int Cl.⁷: **E05B 49/00**

(21) Anmeldenummer: **94117526.7**

(22) Anmeldetag: **07.11.1994**

(54) **Diebstahlschutzsystem für ein Kraftfahrzeug**

Antitheft system for a motor vehicle

Système antivol pour un véhicule automobile

(84) Benannte Vertragsstaaten:
**DE FR GB**

(43) Veröffentlichungstag der Anmeldung:
**08.05.1996 Patentblatt 1996/19**

(73) Patentinhaber: SIEMENS
AKTIENGESELLSCHAFT
80333 München (DE)

(72) Erfinder:
• **Fischer, Armin**
**D-90455 Nürnberg (DE)**
• **Glehr, Manfred**
**D-93073 Neutraubling (DE)**
• **Haimerl, Stefan**
**D-93142 Leonberg (DE)**

(56) Entgegenhaltungen:
**EP-A- 0 151 087** **FR-A- 2 518 285**
**GB-A- 2 152 311** **US-A- 4 918 955**

EP 0 710 756 B1

**Beschreibung**

Die Erfindung betrifft ein Diebstahlschutzsystem für ein Kraftfahrzeug. Sie betrifft insbesondere ein Schließsystem für Türen eines Kraftfahrzeugs und eine Wegfahrsperre, durch die bei Berechtigung ein Starten des Motors ermöglicht wird.

Ein bekanntes Diebstahlschutzsystem (US 4,918,955) weist ein Zündschloß mit einer Sendeantenne in Form einer Spule auf. Durch einen Oszillator wird die Spule erregt. Der Zündschlüssel weist einen Schwingkreis auf, der mit der Senderspule zusammenwirkt. Sobald der Zündschlüssel in das Zündschloß eingeführt ist, wird eine codierte Information von dem Zündschlüssel auf das Schloß übertragen. Wenn die codierte Information mit einer Sollcodeinformation übereinstimmt, wird eine Wegfahrsperre im Kraftfahrzeug freigegeben, so daß das Kraftfahrzeug gestartet werden kann.

Bei einem bekannten Demodulator (GB 2 152 311 A1) wird zwar ein moduliertes Signal detektiert und dieses Signal in zwei voneinander getrennten Wegen einmal bei 0° und ein andermal bei 90° phasenverschoben aufbereitet. Mit Hilfe eines Kommutators werden die beiden Wege ständig mit einem Detektor verbunden. Die modulierte Schwingung wird jedoch nicht erneut abgetastet, auch nicht um einen Phasenwinkel gegenüber der vorherigen Abtastung verschoben, da die Phasenwinkel gegenüber vorher immer gleich bleiben.

Bei solchen Systemen kann es jedoch passieren, daß trotz eingestecktem und gut funktionierendem Zündschlüssel keine Codeinformation von einem Empfangskreis erkannt wird. Dies ist dadurch bedingt, daß sich infolge von Bauelementetoleranzen oder Temperatureinfluß ein Arbeitspunkt des Systems so weit verschiebt, daß er in einer sogenannten Nullstelle liegt.

Das Problem der Erfindung ist es, ein Diebstahlschutzsystem zu schaffen, durch das trotz Bauelementetoleranzen und Temperatureinflüssen ein sicheres Betätigen von Türen oder ein Starten des Kraftfahrzeugs möglich ist.

Das Problem wird erfindungsgemäß durch die Merkmale von Patentanspruch 1 gelöst. Dabei weist ein stationärer Sender in einem Schloß einen Schwingkreis auf, der mit einem Schwingkreis eines tragbaren Transponders in einem Schlüssel gekoppelt ist. Im Sender wird eine Schwingung erzwungen, deren

Energie zu dem Transponder übertragen wird, der seinerseits codierte Daten auf den Sender zurücküberträgt. Die Codeinformation des Transponders moduliert dabei die Schwingung des Senderschwingkreises in ihrer Amplitude. Ein Demodulator gewinnt die Codeinformation aus der modulierten Schwingung, vergleicht sie mit einer Sollcodeinformation und bei Übereinstimmung wird ein Freigabesignal erzeugt.

Falls beim Versuch des Erfassens der Codeinformation zunächst kein Erfolg erzielt wird, so wird die modulierte Schwingung nochmals abgetastet, wobei der Abtastzeitpunkt um einen vorbestimmten Phasenwinkel verschoben ist gegenüber dem Abtastzeitpunkt beim ersten Erfassen des Codesignals.

Vorteilhafte Ausgestaltungen der Erfindung sind in den Unteransprüchen gekennzeichnet.

Ausführungsbeispiele der Erfindung sind anhand der schematischen Zeichnungen näher erläutert. Es zeigen:

| | |
|---|---|
| Figur 1 | ein schematisches Blockschaltbild des erfindungsgemäßen Diebstahlschutzsystems, |
| Figur 2 | eine modulierte Schwingung in einem Empfänger des Diebstahlschutzsystems, |
| Figur 3a und 3b | eine Darstellung sinusförmiger Signale und deren Zeigerdiagramme in der komplexen Ebene. |
| Figur 4 | zwei Perioden einer modulierten Schwingung, |
| Figur 5a, 5b und 6 | Zeigerdiagramme zu vorbestimmten Zeitpunkten der modulierten Schwingung, |
| Figur 7 | ein Blockschaltbild und |
| Figur 8 | eine Schaltungsanordnung des Diebstahlschutzsystems. |

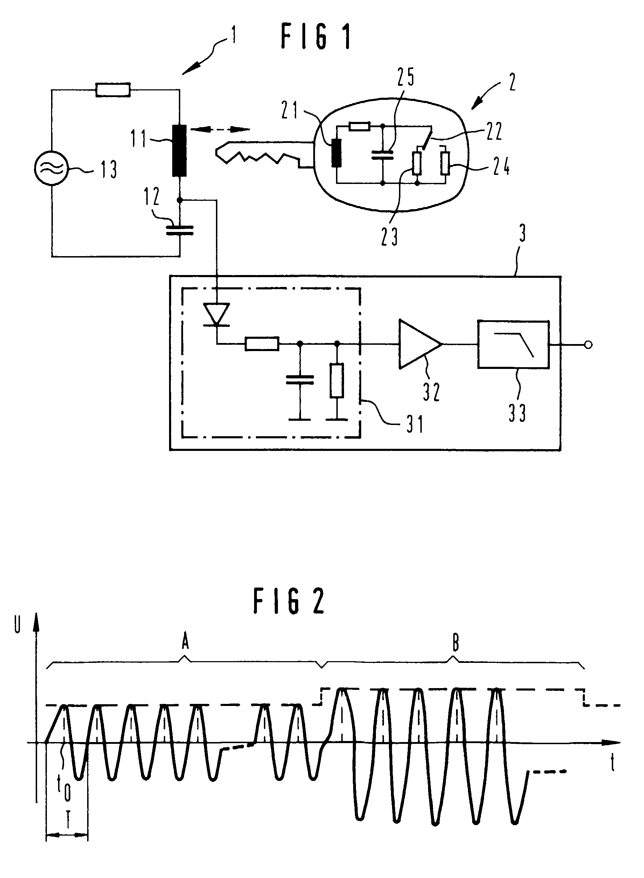

Ein erfindungsgemäßes Diebstahlschutzsystem weist einen stationären Transceiver 1 (Figur 1) in einem Schloß auf, der mit einem tragbaren Transponder 2 in einen Zünd- oder Tür-Schlüssel über eine transformatorische Kopplung zusammenwirkt, wenn sich der Transponder 2 in der Nähe des Transceivers 1 befindet. Der Transceiver 1 überträgt Energie zu dem Transponder 2. In dem Transponder 2 gespeicherte Codeinformationen werden zu dem Transceiver 1 zurückübertragen (Energieübertragung und Datenrückübertragung sind durch einen gestrichelt gezeichneten Doppelpfeil dargestellt).

Zur Energie- und Datenübertragung weist der Transceiver 1 eine Senderspule 11 auf, die beispielsweise um das Zündschloß oder das Türschloß gewickelt ist. Die Senderspule 11 bildet zusammen mit einem Senderkondensator 12 einen Senderschwingkreis. Der Senderschwingkreis wird von einem Generator oder einem Oszillator 13 mit einer Wechselspannung oder einem Wechselstrom im Takte seiner Oszillatorfrequenz $f_O$ gespeist und zu einer Schwingung angeregt. Das von der Senderspule 11 erregte Feld induziert in einer Transponderspule 21 eine Spannung, falls diese mit der Senderspule 11 induktiv gekoppelt ist. Dies ist z.B. dann der Fall, wenn der Schlüssel in das Schloß eingeführt ist.

Der Transponder 2 weist einen Lastschalter 22 auf, der im Takt einer vorbestimmten und im Transponder 2 gespeicherten Codeinformation zwischen zwei verschiedenen Lastwiderständen 23 und 24 hin- und herschaltet. Da die beiden Spulen 11 und 21 induktiv miteinander gekoppelt sind (wie etwa Primär- und Sekundärspule eines Transformators), wird der Senderschwingkreis durch den Transponderschwingkreis im Rhythmus der Code-information belastet. Folglich wird die Codeinformation auf den Transceiver 1 übertragen. Dort wird sie durch eine Auswerteeinheit 3 erfaßt und ausgewertet.

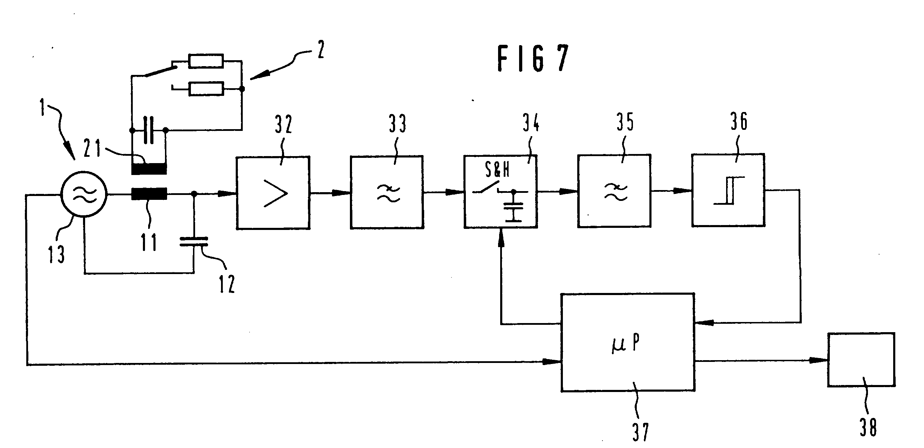

Hierzu weist die Auswerteeinheit 3 einen Demodulator 31 auf, der die Spannung zwischen der Senderspule 11 und dem Sender-kondensator 12 abgreift und sie über einen Verstärker 32 und einen Tiefpaß 33 an eine in der Figur 1 nicht dargestelltes Abtasthalteglied 34 (Figur 7) weitergibt.

Der Transponder 2 weist einen Schwingkreis mit der Transponderspule 21, einem Transponderkondensator 25 und den beiden Lastwiderständen 23 und 24 auf. Die Lastwiderstände 23 und 24 werden durch einen nicht dargestellten Codegenerator über den Lastschalter 22 im Rhythmus der Codeinformation abwechselnd dem Transponderschwingkreis zugeschaltet. Dadurch wird der Senderschwingkreis im Rhythmus der Codeinformation belastet. Es können auch mehrere unterschiedliche Lastwiderstände vorhanden sein.

Die Codeinformation ist in einem nicht dargestellten Speicher des Transponders 2 gespeichert, beispielsweise einem ROM oder EEPROM. Die Codeinformation kann aber auch hardewaremäßig auf dem Transponder 2 enthalten sein. Für die Erfindung ist es jedoch unwesentlich, wie die Codeinformation in dem Transponder 2 enthalten und wie sie zu dem Transceiver 1 übertragen wird.

Der Senderschwingkreis schwingt mit der Erregerfrequenz, die durch den Oszillator 13 vorgegeben wird. Wenn der Zündschlüssel in das Zündschloß eingeführt wird, so befinden sich die Senderspule 11 und die Transponderspule 21 in unmittelbarer Nähe zueinander. Die beiden Spulen 11 und 21 sind infolgedessen induktiv miteinander derart gekoppelt, daß die Codeinformation auf den Senderschwingkreis übertragen word, d.h. die Schwingung des Senderschwingkreises wird beeinflußt (Figur 2).

Dadurch daß der Transponderschwingkreis abwechselnd mit zwei unterschiedlichen Lastwiderständen 23 und 24 belastet wird, wird der Senderschwingkreis belastungsmoduliert, und zwar in dem Takt, wie zwischen den Lastwiderständen 23 und 24 hin-und hergeschaltet wird.

Die Belastungsmodulation entspricht einer Amplitudenmodulation (Figur 2). Die Frequenz der Schwingung ändert sich durch die Belastung nicht. Im ersten Abschnitt A der Schwingung belastet der erste Lastwiderstand 23 oder 24 den Senderschwingkreis und im darauf folgenden Abschnitt B belastet der andere Lastwiderstand 24 bzw. 23 den Senderschwingkreis.

Ein Abschnitt besteht aus mehreren Perioden mit jeweils identischen, hintereinanderfolgenden Schwingungszügen mit jeweils gleicher Periodendauer T und gleicher Amplitude. Nach jeweils einem Abschnitt A oder B ändert sich die Amplitude und die Phase der Schwingung. Stellvertretend für die gesamte Schwingung werden daher im folgenden eine Schwingung A während einer Periodendauer im Abschnitt A und eine Schwingung B während einer Periodendauer im Abschnitt B betrachtet.

In der Hüllkurve (in der Figur 2 durch die gestrichelte Linie dargestellt) der modulierten Schwingung auf der Senderseite ist die Codeinformation des Transponders 2 enthalten . Die Auswerteeinheit 3 filtert diese Codeinformation aus der modulierten Schwingung heraus, d.h. die Amplituden der modulierten Schwingung werden gemessen und ausgewertet.

Diese Codeinformation wird digitalisiert und in einer digitalen Recheneinheit 37 mit einer gespeicherten Sollcodeinformation verglichen. Wenn die beiden Codeinformationen übereinstimmen, wird ein Freigabesignal an ein Sicherheitsaggregat 38 geschickt, das ein Steuersignal erzeugt.

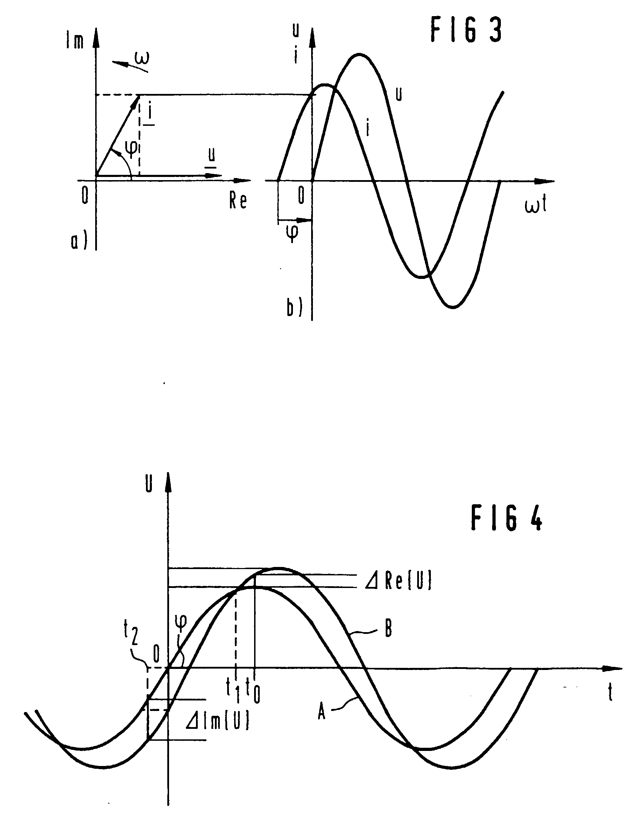

Der zeitliche Verlauf von sinusförmigen Größen (Figur 3b) wird üblicherweise in einem Koordinatensystem dargestellt, in dem auf der x-Achse die Zeit t oder die Kreisfrequenz $\omega t$ und auf der y-Achse die Amplitude aufgetragen ist. Ein Augenblickswert einer sinusförmigen Spannung u oder eines Stromes i wird durch zwei Größen, und zwar durch die Amplitude ü und die Phase $\varphi$ bei einer bestimmten Frequenz f eindeutig bestimmt. Zur Veranschaulichung von solchen Größen werden diese üblicherweise in einem Zeigerdiagramm in der komplexen Ebene dargestellt (Figur 3a). Dabei wird auf der x-Achse der Realteil Re und auf der y-Achse der Imaginärteil Im aufgetragen. Der Augenblickswert ist dann als komplexer Zeiger $\underline{u}$ oder $\underline{i}$ mit einer bestimmten Länge und einer bestimmten Phase $\varphi$ dargestellt. Der Unterstrich $\underline{u}$ oder $\underline{i}$ verdeutlicht dabei die komplexe Größe.

In dem Beispiel von den Figuren 3a und 3b ist die Spannung u gegenüber dem Strom i um den Phasenwinkel $\varphi$ phasenverschoben. Die Augenblickswerte, d.h. Real- und Imaginärteil zum Zeitpunkt $\omega t = 0$ können als Projektionen auf die jeweilige Achse abgelesen oder berechnet werden:

Für den Realteil gilt:

$$\mathrm{Re}\{\underline{u}\} = \hat{u}*\cos \omega t,$$

wobei der $\mathrm{Re}\{\underline{u}\} = \hat{u}$ bei $\omega t = 0$ ist.

Für den Imaginärteil gilt:

$$\mathrm{Im}\{\underline{u}\} = \hat{u} * \sin \omega t,$$

wobei der $\mathrm{Im}\{\underline{u}\} = 0$ bei $\omega t = 0$ ist;

Mit $\hat{u}$ = maximale Amplitude und $\omega t$ = Kreisfrequenz der Schwingung.

In der Figur 4 ist die modulierte Schwingung in den Abschnitten A und B während jeweils einer Periodendauer T dargestellt (vgl. Figur 2). Die Schwingung A wird infolge der Belastung durch den ersten Lastwiderstand 23 oder 24 und die Schwingung B infolge der Belastung durch den zweiten Lastwiderstand 24 bzw. 23 hervorgerufen. Die beiden Schwingungen A und B treten in Wirklichkeit nicht gleichzeitig auf, sondern befinden sich in zeitlich aufeinanderfolgenden Abschnitten, wie in Figur 2 dargestellt. Zur besseren Veranschaulichung sind die Schwingungen A und B in der Figur 4 übereinander dargestellt, wobei sich die beiden Schwingungen A und B in ihrer Amplitude unterscheiden und um den Phasenwinkel $\varphi$ zueinander phasenverschoben sind.

Um die Größe der modulierten Schwingung und damit die Codeinformation zu erhalten, wird die Schwingung zu äquidistanten Zeitpunkten abgetastet (vgl. Figur 2). Die modulierte Schwingung kann mehrmals innerhalb einer Periodendauer oder einmal innerhalb mehrerer Periodendauern abgetastet werden.

Vorteilhafterweise entspricht der Abstand zwischen zwei Abtastzeitpunkten genau einer Periodendauer von $2\pi$ oder einem ganzzahligen Vielfachen (= $2\pi n$ mit n = 1, 2, 3 ...) davon. Die größte Genauigkeit wird erreicht, wenn der Abtastzeitpunkt (oder auch als Arbeitspunkt bezeichnet) so gelegt wird, daß die Schwingungen A und B möglichst bei einem Maximum abgetastet werden, d.h. wie in Figur 4 dargestellt, wird der Abtastzeitpunkt auf $t_0 = \pi/2$ in Bezug auf den Referenzpunkt 0 gelegt, denn dort hat die Schwingung A ihr Maximum. Der Abtastzeitpunkt wird durch entsprechende Dimensionierung aller beteiligten Bauteile festgelegt und unterliegt daher gewissen Schwankungen, die durch Bauteiletoleranzen oder Temperaturänderungen verursacht werden.

Wird die modulierte Schwingung immer zu einem konstanten Zeitpunkt innerhalb der Periode abgetastet, beispielsweise bei $t_0 = 90°$ (= $\pi/2$), so erhält man von der Schwingung A (Figur 4) die maximale Amplitude. Da die Schwingung B um den Phasenwinkel $\varphi$ phasenverschoben ist, erhält man zum Zeitpunkt $t_0$ zwar nicht die maximale Amplitude, aber dennoch eine gut verwertbare Amplitude, die sich von derjenigen der Schwingung A deutlich unterscheidet. Die Differenz der beiden Amplituden wird für die Codeinformation ausgewertet.

Infolge von Bauteiletoleranzen und Temperatureinflüssen kann es nun passieren, daß sich einerseits der Abtastzeitpunkt verschiebt oder andererseits der Phasenwinkel $\varphi$ zwischen den Schwingungen A und B vergrößert oder verkleinert. Wenn beispielsweise zum Zeitpunkt $t_1$ abgetastet würde, so sind in diesem Punkt die beiden Amplituden gleich. Der Demodulator 31 erfaßt also keine Codeinformation, obwohl die modulierte Schwingung eine Codeinformation enthält.

Wenn zunächst keine Codeinformation aus der modulierten Schwingung erhältlich ist, muß erfindungsgemäß die modulierte Schwingung zu einem zu dem ersten Abtastzeitpunkt um einem Phasenwinkel $\varphi_1$ phasenverschobenen Abtastzeitpunkt vorgenommen werden. Angenommen in $t_0$ seien beide Amplituden gleich groß, so kann beispielsweise bei t = 0 nochmals abgetastet werden. Dort unterscheiden sich die beiden Amplituden deutlich voneinander. Bei einer Abtastung bei $t_1$ müßte dann bei $t_2$ nochmals abgetastet werden.

Der Phasenwinkel $\varphi_1 = 90°$ (= $\pi/2$) ist ein Sonderfall, bei dem die Erfindung besonders einfach zu erklären ist. Dieser Winkel entspricht genau der Phasendifferenz zwischen Real- und Imaginärteil. Daher können die Unterschiede in den Amplituden zu den beiden Abtastzeitpunkten auch anhand der Differenz zwischen den beiden Realteilen $\triangle\mathrm{Re}\{u\}$ und der Differenz zwischen den beiden Imaginärteilen $\triangle\mathrm{Im}\{u\}$ erklärt werden:

$$\triangle\mathrm{Re}\{u\} = u_A(\omega t + 2\pi (n+1/4)) - u_B(\omega t + 2\pi(n+1/4))$$

$$\triangle\mathrm{Im}\{u\} = u_A(\omega t + 2\pi n) - u_B(\omega t + 2\pi n)$$

mit n = 0, 1, 2, 3 ... (Anzahl der Perioden der Schwingung).

Bei t = 0 und innerhalb der ersten Periode (n = 0) ergeben sich folgende Werte für die Differenzen der Real- und Imaginärteile:

$$\triangle\mathrm{Re}\{u\} = u_A(\pi/2) - u_B(\pi/2),$$

d.h. Amplitudendifferenz zum Zeitpunkt t = 90° = $\pi/2$

$$\triangle \mathrm{Im}\{u\} = u_A(0) - u_B(0),$$

d.h. Amplitudendifferenz zum Zeitpunkt t = 0°

Werden die Differenzen der Realteile und die der Imaginärteile betragsmäßig addiert, so erhält man daraus die Codeinformation.

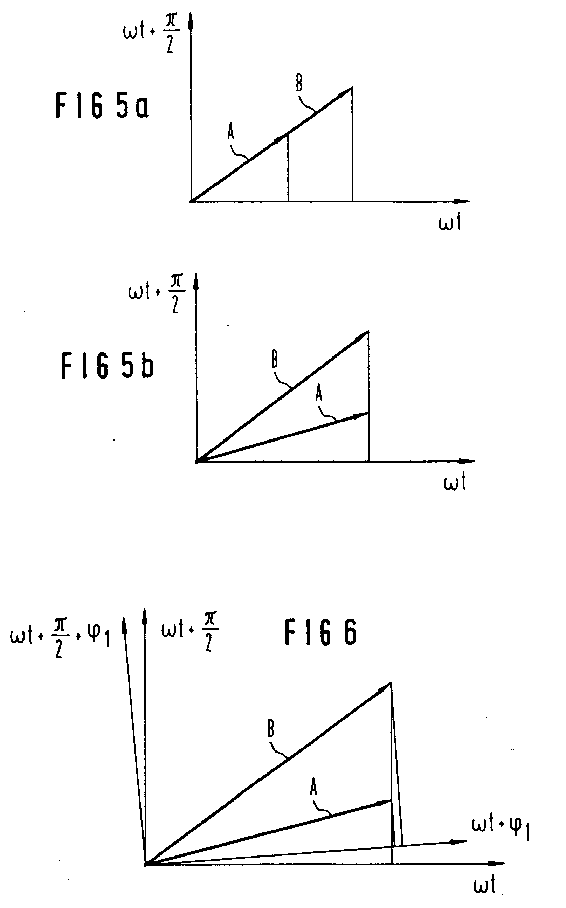

In der Figur 5a sind zwei Zeiger und zwar diejenigen des Realteils der beiden Schwingungen A und B zu einem Abtastzeitpunkt dargestellt. In der Regel unterscheidet sich die Länge der Zeiger um einen bestimmten Betrag, d.h. die Realteile unterscheiden sich und eine Codeinformation kann gewonnen werden. Tritt jedoch der Sonderfall auf, daß die Realteile gleich sind (Figur 5b), so kann die Codeinformation nicht erhalten werden, da trotz modulierter Schwingung kein Unterschied in den Amplituden erkannt wird. Dies kann durch Bauteiletoleranzen oder Temperatureinfluß bedingt sein, denn das Diebstahlschutzsystem wird herstellerseitig so dimensioniert, daß unter normalen Bedingungen immer eine Codeinformation beim erstmaligen Abtasten der modulierten Schwingung erhalten wird.

Falls dennoch beide Realteile gleich groß sind, so befindet sich das System mit seinem Arbeitspunkt in einer sogenannten Nullstelle, die durch Bauteiletoleranzen oder Temperatureinflüsse bedingt ist, allerdings unerwünscht ist. Denn trotz korrekt arbeitendem Transponder 2, kann nicht erkannt werden, ob der Transponder 2 berechtigt ist, da keine Codeinformation erfaßt wird.

In einem solchen Fall wird die modulierte Schwingung erfindungsgemäß erneut abgetastet, und zwar um einen Phasenwinkel $\varphi_1$ verschoben. Die erneute Abtastung ist in der Figur 6 dargestellt und entspricht einer Drehung des Koordinatensystems um den Phasenwinkel $\varphi_1$. Aus der Figur 6 wird ersichtlich, daß bei der um den Phasenwinkel $\varphi_1$ phasenverschobenen Abtastung ein Unterschied zwischen den beiden Amplituden erfaßt wird und die Codeinformation aus der modulierten Schwingung erhalten werden kann.

Der Phasenwinkel $\varphi_1$, um den der zweite Abtastzeitpunkt gegenüber der ersten Abtastzeitpunkt verschoben ist, sollte deutlich größer als 0° und deutlich kleiner als 360°; er sollte also zwischen 0° und 360° (= $2\pi$) liegen. In einem vorteilhaften Sonderfall beträgt $\varphi_1$ = 90° (= $\pi/2$). Dann entspricht die doppelte Abtastung einer Zerlegung in den Realteil und den Imaginärteil zu einem bestimmten Zeitpunkt der modulierten Schwingung.

In der Figur 7 ist ein Blockschaltbild des erfindungsgemäßen Diebstahlschutzsystems dargestellt. Der Oszillator 13 erzwingt mit seiner Oszillatorschwingung eine Schwingung gleicher Frequenz im Senderschwingkreis, die infolge des Annäherns des Transponders 2 an den Senderschwingkreis belastungsmoduliert wird. Das modulierte Signal wird über einen Verstärker 32 und einen Tiefpaß 33 zu einem Abtasthalteglied 34 geführt, wo der Wert des Signal zu dem vorgegebenen Zeitpunkt $t_0$ gemessen und für eine kurze Zeit gehalten wird. In einem weiteren Tiefpaß 35 wird das abgetastete Signal geglättet und einem Schmitt-Trigger 36 zugeführt, der das geglättete Signal in ein Rechtecksignal für die Recheneinheit 37 wandelt. Verstärker 32, Tiefpaß 33, Abtasthalteglied 34, Tiefpaß 35 und Schmitt-Trigger 36 können daher auch als Demodulator 31 bezeichnet werden.

Die Oszillatorschwingung wird ebenfalls der Recheneinheit 37 als Referenz- oder Synchronisationssignal zugeführt. Somit kann das Abtasthalteglied 34 synchron zu der Erregerschwingung von der Recheneinheit 37 angesteuert werden. Damit ergibt sich ein fester Referenzpunkt, auf den alle Abtastzeitpunkte bezogen sind. Dadurch wird auch gewährleistet, daß die modulierte Schwingung innerhalb jeder Periodendauer immer zum gleichen Zeitpunkt abgetastet wird.

Zunächst wird das modulierte Signal zu einem vorgegebenen Zeitpunkt abgetastet, beispielsweise bei t0. Wird bereits zu diesem Zeitpunkt ein Unterschied in den Amplituden bemerkt, so liegt eine auswertbare Codeinformation vor. Diese Codeinformation wird dann mit einer Sollcodeinformation verglichen, die herstellerseitig in einem Speicher der Recheneinheit 37 abgespeichert ist. Wenn die beiden Codesignale übereinstimmen, ist der Transponder 2 berechtigt Türen zu entriegeln oder die Wegfahrsperre zu lösen. Ein Freigabesignal wird daraufhin erzeugt und dem Sicherheitsaggregat 38 zugeführt.

Wird zunächst keine Codeinformation erhalten, so wird das modulierte Signal erneut zu einem weiteren, vorbestimmten Zeitpunkt abgetastet, wobei dieser Abtastzeitpunkt um den Phasenwinkel φ1 verschoben ist. Das erneut abgetastete Signal wird dann ebenso verarbeitet, wie das zuerst abgetastete Signal. Danach liegt auf jeden Fall eine Codeinformation vor.

Da die Oszillatorschwingung auch der Recheneinheit 37 zugeführt wird, sind die Abtastzeitpunkte immer an wohldefinierten Stellen innerhalb einer Periodendauer.

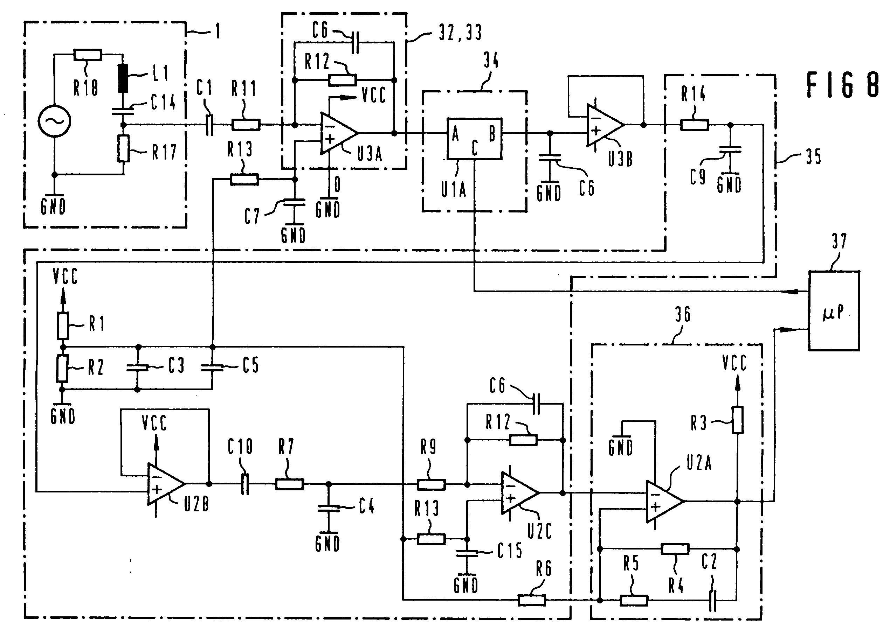

In der Figur 8 ist ein Ausführungsbeispiel für eine Schaltungsanordnung des erfindungsgemäßen Diebstahlschutzsystems dargestellt. Die Bauteile aus dem Blockdiagramm gemäß Figur 7 sind in der Figur 8 gestrichelt gezeichnet.

Die modulierte Schwingung kann auch derart abgetastet werden, daß zumindest zwei Spannungswerte innerhalb jeder Periodendauer der Schwingungen A und B erfaßt werden. Dabei müssen jedoch die Abtastzeitpunkte jeweils um den Phasenwinkel φ1 zueinander verschoben sein. Diese Spannungswerte können der Recheneinheit 37 zugeführt und dort ausgewertet werden. Wenn aus dem ersten Spannungswert keine Codeinformation erhältlich ist, so wird auf den nächsten Spannungswert zurückgegriffen.

Ebenso ist es möglich, die modulierte Schwingung derart abzutasten, daß zumindest ein erster Spannungswert innerhalb einer ersten Periodendauer bei $t_0$ erfaßt wird und ein zweiter Spannungswert in einer der darauf folgenden Periodendauern der modulierten Schwingung, jedoch um den Phasenwinkel φ1 innerhalb dieser Periodendauer in bezug auf den Zeitpunkt t0 phasenverschoben ist. Diese Spannungswerte werden dann der Recheneinheit 37 zugeführt und dort ausgewertet.

Der Schwingkreis wird bei dem vorliegenden Ausführungsbeispiel mit einer Frequenz f = 125kHz erregt. Dies entspricht einer Periodendauer T = 8μs ($\equiv 2\pi$). Eine Phasenverschiebung φ = π/2 ($\equiv 90°$) entspricht also einer Zeitverschiebung von 2μs.

Die Recheneinheit 37 kann durch einen Mikroprozessor oder eine funktionell gleichwertige Einheit realisiert sein.

Das Sicherheitsaggregat kann eine Türschloßverriegelung oder ein Teil einer Wegfahrsperre sein. Unter einer Wegfahrsperre sind solche elektronischen Geräte im Kraftfahrzeug zu verstehen, die ein Starten des Motors nur bei berechtigter Freigabe ermöglichen. So kann beispielsweise die Motorsteuerung, ein EIN/AUS-Ventil in der Kraftstoffleitung oder einen Schalter im Zündkreis als Sicherheitsaggregat bezeichnet werden.

**Patentansprüche**

1. Diebstahlschutzsystem für ein Kraftfahrzeug mit

   - einem tragbaren Transponder (2), der eine Codeinformation trägt,
   - einem stationären Transceiver (1), der einen Schwingkreis (11, 12) aufweist, der durch einen Oszillator (13) zum Schwingen angeregt wird und dessen Schwingung durch den Transponder (2) im Takte der Codeinformation moduliert wird, und
   - einem Demodulator (31), dem die modulierte Schwingung des Schwingkreises zugeführt wird,
   - wobei die Codeinformation aus der modulierten Schwingung durch Abtasten bei zumindest einem vorbestimmten Abtastzeitpunkt erhalten, in einer Recheneinheit (37) mit einer Sollcodeinformation verglichen wird und bei Übereinstimmung ein Freigabesignal an ein Sicherheitsaggregat (38) gesendet wird,

   **dadurch gekennzeichnet, daß**
   die modulierte Schwingung um einen vorbestimmten Phasenwinkel ($φ_1$) verschoben erneut abgetastet wird, wenn zunächst keine Codeinformation durch den Demodulator (31) erkannt wird.

2. Diebstahlschutzsystem nach Anspruch 1, dadurch gekennzeichnet, daß der Phasenwinkel ($φ_1$) 90° beträgt.

3. Diebstahlschutzsystem nach Anspruch 2, dadurch gekennzeichnet, daß der Transponder (2) über eine Transponderspule (21) mit der Senderspule (11) induktiv gekoppelt ist.

4. Diebstahlschutzsystem nach Anspruch 3, dadurch gekennzeichnet, daß die Schwingung des Schwingkreises abhängig von der Codeinformation infolge der induktiven Kopplung belastungsmoduliert wird.

5. Diebstahlschutzsystem nach Anspruch 4, dadurch gekennzeichnet, daß das Sicherheitsaggregat (38) ein Türschloß oder eine Wegfahrsperre ist.

**Claims**

1. Anti-theft protection system for a motor vehicle with

   - a portable transponder (2) which carries code information,
   - a stationary transceiver (1) which has an oscillating circuit (11, 12) which is induced to oscillation by means of an oscillator (13) and whose oscillation is modulated by the transponder (2) in phase with the code information, and
   - a demodulator (31) to which the modulated oscillation of the oscillating circuit is delivered,
   - where the code information from the modulated oscillation is obtained by sampling at a minimum of one predefined sampling time point, compared in a computing unit (37) with the required code information and, when a match is determined, a release signal is sent to a security unit (38),

**characterised in that**

the modulated oscillation is sampled again, shifted by a predefined phase angle ($\varphi_1$), if no code information is initially recognised by the demodulator (31).

2.   Anti-theft protection system in accordance with Claim 1, characterised in that the phase angle ($\varphi_1$) is 90°.

3.   Anti-theft protection system in accordance with Claim 2, characterised in that the transponder (2) is inductively coupled with the transmitter coil (11) by way of a transponder coil (21).

4.   Anti-theft protection system in accordance with Claim 3, characterised in that the oscillation of the oscillating circuit is load-modulated depending on the code information as a consequence of the inductive coupling.

5.   Anti-theft protection system in accordance with Claim 4, characterised in that the security unit (38) is a door lock or an immobiliser.

**Revendications**

1.   Système de protection contre le vol pour un véhicule automobile, comportant:

   -   un transpondeur (2) portable, portant une information codée,
   -   un émetteur-récepteur (1) fixe, présentant un circuit oscillant (11, 12) qui est excité en oscillation par un oscillateur (13) et dont l'oscillation est modulée par le transpondeur (2) suivant le rythme de l'information codée.
   -   un démodulateur (31) auquel est envoyée l'oscillation modulée du circuit oscillant,
   -   l'information codée étant obtenue à partir de l'oscillation modulée par exploration à au moins un instant d'exploration prédéfini, puis comparée, dans une unité de calcul (37), à une information codée de consigne, et un signal de libération étant envoyé, en cas de coïncidence, à un appareil de sécurité (38),

      caractérisé en ce que,

      si aucune information codée n'a d'abord été reconnue par le démodulateur (31), l'oscillation modulée est explorée de nouveau, décalée en phase d'un angle de phase prédéfini ($\varphi_1$).

2.   Système de protection contre le vol suivant la revendication 1, caractérisé en ce que l'angle de phase ($\varphi_1$) est de 90°.

3.   Système de protection contre le vol suivant la revendication 2, caractérisé en ce que le transpondeur (2) est couplé inductivement à la bobine d'émetteur (11) par l'intermédiaire d'une bobine de transpondeur (21).

4.   Système de protection contre le vol suivant la revendication 3, caractérisé en ce que l'oscillation du circuit oscillant est modulée en charge en fonction de l'information codée, à la suite du couplage inductif.

5.   Système de protection contre le vol suivant la revendication 4, caractérisé en ce que l'appareil de sécurité (38) est une serrure de porte ou un blocage du démarrage.

# FIG 1

# FIG 2

FIG 3

FIG 4

FIG 5a

FIG 5b

FIG 6

FIG 7

FIG 8